# EUROPÄISCHE PATENTSCHRIFT

(11) **EP 1 651 846 B1**
(45) Veröffentlichungstag und Bekanntmachung des Hinweises auf die Patenterteilung: **13.07.2011**
(21) Anmeldenummer: 04741024.6
(22) Anmeldetag: 15.07.2004
(51) Int. Cl.: F02B 29/04, F02B 37/013

(54) **KREISLAUFANORDNUNG ZUR KÜHLUNG VON LADELUFT UND VERFAHREN ZUM BETREIBEN EINER DERARTIGEN KREISLAUFANORDNUNG**
CIRCUIT ARRANGEMENT FOR COOLING CHARGE AIR AND METHOD FOR OPERATING A CIRCUIT ARRANGEMENT OF THIS TYPE
SYSTEME DE CIRCULATION POUR REFROIDIR DE L'AIR DE SURALIMENTATION ET PROCEDE POUR FAIRE FONCTIONNER UN SYSTEME DE CIRCULATION DE CE TYPE

(30) Priorität: 31.07.2003 DE 10335567
(43) Veröffentlichungstag der Anmeldung: 03.05.2006
(73) Patentinhaber: Behr GmbH & Co. KG, 70469 Stuttgart (DE)
(72) Erfinder: ROGG, Stefan, 70193 Stuttgart (DE); SRNIK, Annegret, 73730 Esslingen (DE)
(74) Vertreter: Grauel, Andreas
(86) Internationale Anmeldenummer: PCT/EP2004/007827
(87) Internationale Veröffentlichungsnummer: WO 2005/012707

(56) Entgegenhaltungen:
- EP-A- 0 522 471
- AT-U- 6 051
- DE-A- 19 948 220
- US-A- 3 355 877
- US-A- 3 977 195
- US-A- 5 269 143
- US-A- 5 394 854
- US-A1- 2002 056 444

## Beschreibung

Die Erfindung betrifft eine Kreislaufanordnung zur Kühlung von Ladeluft bei einem Kraftfahrzeug mit einem Turbolader gemäß dem Oberbegriff des Anspruchs 1 sowie ein Verfahren zum Betreiben einer derartigen Kreislaufanordnung.

Gemäß dem Stand der Technik werden zur Leistungssteigerung von Motoren Turbolader Erhöhung des Luftdurchsatzes im Motor verwendet. Bei der hierfür erforderlichen Verdichtung wird die Luft, im Folgenden als Ladeluft bezeichnet, jedoch auf Grund der Kompression im Turbolader erwärmt. Um den mit der Erwärmung der Ladeluft einhergehenden Dichteverlust zu kompensieren, d.h. die Luftdichte zu erhöhen, werden Luftkühler verwendet, die vorne im Kühlmodul angeordnet sind und zur Kühlung der Ladeluft dienen. Die Ladeluft strömt dabei durch einen Wärmetauscher, der von Umgebungsluft durchströmt und damit gekühlt wird. Dadurch ist eine Abkühlung der Ladeluft auf eine Temperatur möglich, die etwa 15 K über der Temperatur der Umgebungsluft liegt.

Ferner ist bekannt, dass die Kühlung der Ladeluft über einen Kühlmittelkreislauf erfolgt, beispielsweise einem Niedertemperatur-Kreislauf, in dem das Kühlmittel auf sehr niedrige Temperaturen herabgekühlt wird. Mit diesem kalten Kühlmittel wird die Ladeluft in einem Ladeluft/Kühlmittel-Kühler auf eine vorgegebene Kühltemperatur heruntergekühlt. Für die Verschaltung des Niedertemperatur-Kreislaufs gibt es zwei Varianten, nämlich eine Integration des Niedertemperatur-Kreislaufs in einen Nebenkreislauf des Motorkühlsystems oder eine Ausgestaltung in Form eines separaten Kreislaufs.

Soll die Motorleistung weiter erhöht werden, so stoßen die bekannten Aufladesysteme bezüglich Aufladegrad und Ansprechverhalten bei Niedriglast an ihre Grenzen.

Aus der US 3,977,195 ist ein Verfahren sowie eine Vorrichtung zum Konditionieren eines aufgeladenen Dieselmotors bekannt.

Die US 5,269,143 offenbart ein Kühlsystem zum Kühlen von Ladeluft für einen Verbrennungsmotor.

Es ist Aufgabe der Erfindung, eine Kreislaufanordnung der eingangs genannten Art zu verbessern.

Diese Aufgabe wird gelöst durch eine Kreislaufanordnung mit den Merkmalen des Anspruchs 1.

Erfindungsgemäß wird eine Kreislaufanordnung mit einem Niedertemperatur-Kreislauf zur Kühlung von Ladeluft, die einem Motor zugeführt wird, bei einem Kraftfahrzeug mit einem Turbolader vorgesehen, wobei eine zweistufige Verdichtung der Ladeluft in einem ersten Niederdruck-Turbolader und einem zweiten Hochdruck-Turbolader erfolgt, wobei zur Kühlung der Ladeluft nach dem Niederdruck-Turbolader und vor dem Hockdruck-Turbolader ein erster Kühler und nach dem Hochdruck-Turbolader und vor dem Motor ein zweiter Kühler vorgesehen ist. Durch die Zwischenkühlung nach dem ersten Niederdruck-Turbolader wird sichergestellt, dass keine zu hohen Lufttemperaturen auftreten, wodurch die Standzeit der verwendeten Bauteile, die den hohen Temperaturen ausgesetzt sind, erhöht werden kann. Die zweistufige Kühlung zeigt ein vorteilhaftes dynamisches Verhalten. Da die Zwischenkühlung in der Teillast kaum Wärmelasten aufnimmt, kühlt das im Niedertemperatur-Kreislauf enthaltene Kühlmittel auf ein niedriges Temperaturniveau knapp oberhalb der Umgebungstemperatur ab. Daraus ergibt sich eine erhebliche Kühlleistungsreserve, die beim Übergang auf hohe Motorlast ausgenutzt werden kann.

Erfindungsgemäß ist für die zweite Kühlung der Ladeluft ein Hochdruck-Ladeluft/Luft-Kühler vorgesehen. Dabei werden insbesondere durch die Zwischenkühlung Standfestigkeitsprobleme beim luftgekühlten Hochdruck-Ladeluft/Luft-Kühler vermieden.

Ferner ist erfindungsgemäß der Hochdruck-Ladeluft/Luft-Kühler direkt neben einem Niedertemperatur-Kühler und in Luftströmungsrichtung der Kühlluft gesehen vor einem Haupt-Kühlmittel-Kühler angeordnet ist. Dabei nimmt die Stirnfläche des Niedertemperatur-Kühlers vorzugsweise 20% bis 50% der gesamten Stirnfläche ein.

Der Bauraumbedarf ist im Vergleich zu bekannten Lösungen relativ gering, da es trotz der Zwischenkühlung nur je eine Ladeluft-Leitung zum und vom Kühlmodul gibt und nur ein motomaher kühlmittelgekühlter Ladeluft-Kühler anzuordnen ist.

Bevorzugt ist für die erste Kühlung der Ladeluft ein Niederdruck-Ladeluft/Kühlmittel-Kühler vorgesehen.

Gemäß einer bevorzugten Variante ist der Niedertemperatur-Kreislauf Teil eines Motorkühl-Kreislaufs, jedoch kann er auch getrennt ausgebildet sein, wobei eine Regelung zur Einsparung der Kosten nicht unbedingt nötig ist. Ebenfalls möglich ist eine Zwischenkühlung mit Luft und/oder eine Kühlung der Ladeluft nach der zweiten Verdichterstufe mit Hilfe eines Kühlmittels.

Im Folgenden wird die Erfindung anhand zweier Ausführungsbeispiele unter Bezugnahme auf die Zeichnung im Einzelnen erläutert. Es zeigen:
- Fig. 1: eine Kreislaufanordnung gemäß dem ersten Ausführungs- beispiel,
- Fig. 2: eine Kreislaufanordnung gemäß dem zweiten Ausführungs- beispiel,
- Fig. 3: ein Diagramm, welches die Austrittstemperatur der zweiten Verdichterstuft über der Austrittstemperatur der Zwischen- kühlung zeigt, und

- Fig. 4: ein Diagramm, welches den Stimflächenanteil des Niedertem- peratur-Kühlers über der Austrittstemperatur der Zwischenküh- lung zeigt.

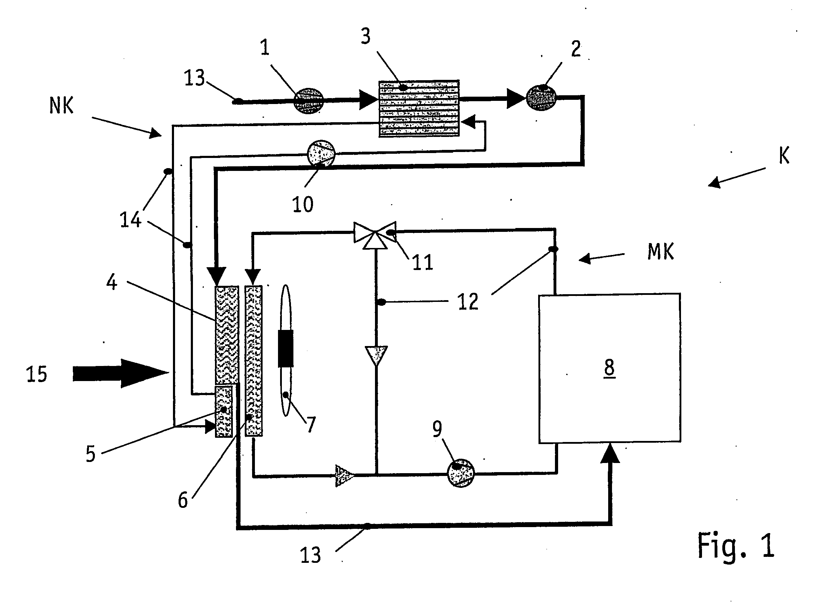

Fig. 1 zeigt eine Kreislaufanordnung K, welche zur Kühlung zweier hintereinandergeschalteter Turbolader, nämlich eines Niederdruck-Turboladers 1 und eines Hochdruck-Turboladers 2, dient. Die mit dem Bezugszeichen 13 bezeichnete Ladeluft wird von der Umgebung angesaugt und im Niederdruck-Turbolader 1 in einer ersten Stufe verdichtet. Dabei erhöht sich die Temperatur der Ladeluft 13. Um eine weitere Verdichtung ohne Beeinträchtigung der Standzeit in Folge einer Überhitzung der mit der Ladeluft 13 in direktem oder indirektem Kontakt stehenden Bauteile zu erzielen, was bei Aluminium bei Temperaturen ab etwa 230°C der Fall ist, wird die verdichtete Ladeluft in einem Niederdruck-Ladeluft/Kühlmittel-Kühler 3 gekühlt, welcher Teil eines Niedertemperatur-Kreislaufs NK ist. Auf den Niedertemperatur-Kreislauf NK wird an späterer Stelle näher eingegangen.

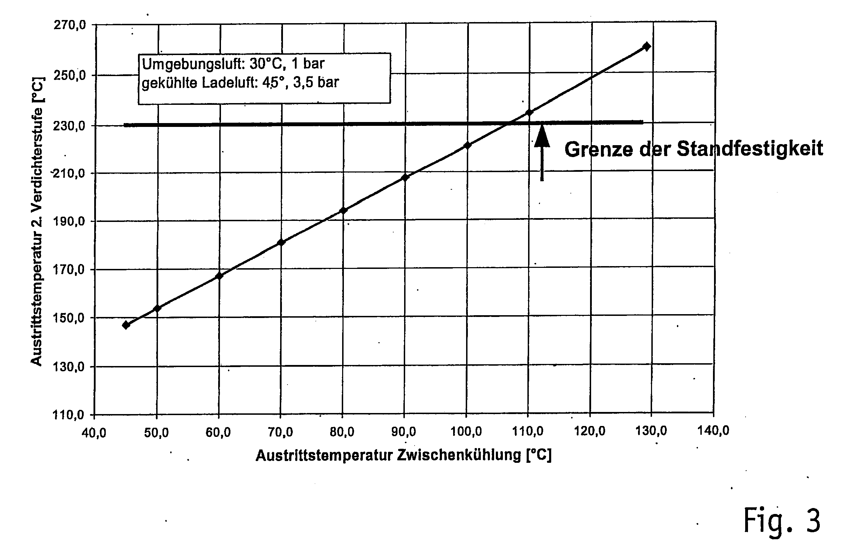

Nach der Kühlung im Niederdruck-Ladeluft/Kühlmittel-Kühler 3 gelangt die Ladeluft 13 in den Hochdruck-Turbolader 2, in dem sie weiter auf ihren Enddruck verdichtet wird, was wiederum mit einer Erhitzung verbunden ist. Um die Ladeluftdichte im (Verbrennungs-)Motor 8 zu erhöhen, wird die heiße Ladeluft 13 in einem Ladeluft/Luft-Kühler 4 gekühlt bevor sie dem Motor 8 zugeführt wird. In Folge der Zwischenkühlung kann erreicht werden, dass die maximalen Ladelufttemperaturen nach der letzten Turboladestufe auf ein Maß begrenzt bleiben, das den Einsatz von luftgekühlten Ladeluft-Kühlem erlaubt (vgl. Fig. 3). Dies ist in Hinblick auf die Kosten und den vorhandenen Bauraum vorteilhaft.

Der Niederdruck-Ladeluft/Kühlmittel-Kühler 3 für die Zwischenkühlung ist motomah angeordnet und wird durch den separaten Niedertemperatur-Kreislauf NK versorgt. Dabei ist im Niedertemperatur-Kreislauf NK ein Luftkühler, im Folgenden als Niedertemperatur-Kühler 5 bezeichnet, vorgesehen, den das Niedertemperatur-Kühlmittel 14 im Anschluss an den Niederdruck-Ladeluft/Kühlmittel-Kühler 3 durchströmt.

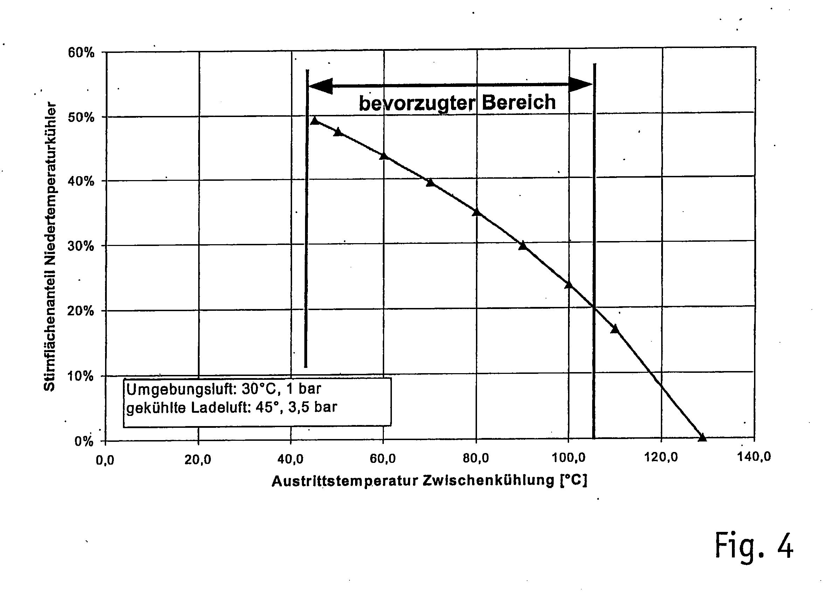

Der Niedertemperatur-Kühler 5 ist, wie in Fig. 1 dargestellt, direkt im Anschluss neben dem Hochdruck-Ladeluft/Luft-Kühler 4 angeordnet, welche beide in Strömungsrichtung der Kühlluft 15 gesehen, vor einem Haupt-Kühlmittel-Kühler 6 angeordnet sind. Die Luft wird dabei von einem Lüfter 7 angesaugt, der hinter dem Haupt-Kühlmittel-Kühler 6 angeordnet ist. Der Niedertemperatur-Kühler 5 ist derart dimensioniert, dass seine Stirnfläche zwischen 20% und 50% der im Kühlmodul maximal möglichen Stirnfläche beträgt (siehe Fig. 4). Alternativ kann auch der Niedertemperatur-Kühler 5 im Luftstrom vor dem luftgekühlten Hochdruck-Ladeluft/Luft-Kühler 4 angeordnet sein.

Die Kühler sind dabei derart angeordnet, dass Kühler, die sich auf niedrigem mittlerem Temperaturniveau befinden, im kalten Kühlluftstrom positioniert werden, und Kühler, die sich auf hohem Temperaturniveau befinden, im warmen Kühlluftstrom positioniert werden.

Das Niedertemperatur-Kühlmittel 14 strömt weiter zur Pumpe 10, welche für das Umlaufen des Kühlmittels 14 sorgt, und von dort aus wiederum zum Niederdruck-Ladeluft/Kühlmittel-Kühler 3.

Gemäß dem vorliegenden Ausführungsbeispiel ist der Niedertemperatur-Kühlmittel-Kreislauf NK nicht geregelt, er kann derart eingestellt sein, dass eine möglichst gute Ladeluftkühlung erzielt wird, Siedeprobleme beim Kühlmittel 14 aber nicht auftreten können. Der Niedertemperatur-Kühlmittel-Kreislauf NK enthält relativ wenig Kühlmittel 14. Die Siedeproblematik ist leicht zu vermeiden, da am Austritt der ersten Verdichterstufe keine sehr hohen Ladeluft-Temperaturen auftreten.

Der Motor 8 wird von einem Motorkühl-Kreislauf MK, in welchem ein MotorKühlmittel 12 strömt gekühlt. Hierin wird das im Haupt-Kühlmittel-Kühler 6 abgekühlte Kühlmittel 12 dem Motor 8 über die Pumpe 9 zugeführt. Die Regelung der Kühlleistung erfolgt durch einen Bypass-Thermostat 11 auf an sich bekannte Weise.

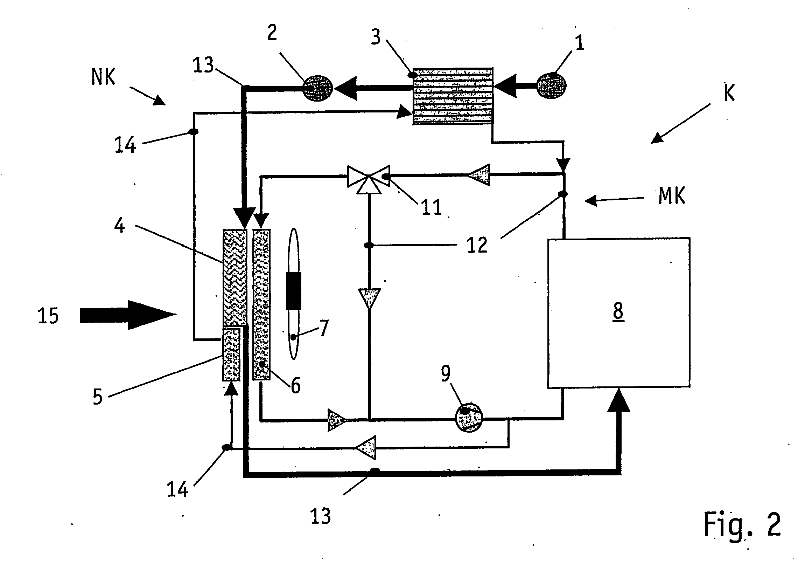

Fig. 2 zeigt eine Kreislaufanordnung K gemäß einem zweiten Ausführungsbeispiel, welche im Wesentlichen mit der des ersten Ausführungsbeispiels übereinstimmt, soweit nicht im Folgenden beschrieben. Hierbei werden die gleichen Bezugszeichen verwendet.

In Abwandlung zum ersten Ausführungsbeispiel ist gemäß dem zweiten Ausführungsbeispiel kein separater Niedertemperatur-Kreislauf NK vorgesehen. Das Kühlmittel 14 wird vielmehr aus dem Motorkühl-Kreislauf MK von der Druckseite der Pumpe 9 abgezweigt und dem Niedertemperatur-Kühler 5 zugeführt. Im Niedertemperatur-Kühler 5 wird das Kühlmittel 14 stark abgekühlt und strömt anschließend zum kühlmittelgekühlten Niederdruck-Ladeluft/Kühlmittel-Kühler 3, wo es der Zwischenkühlung der Ladeluft 13 dient. Anschließend wird das Kühlmittel 14 am Motoraustritt wieder dem Kühlmittelstrom des Motorkühl-Kreislaufs MK zugemischt.

### Bezugszeichenliste

- 1: Niederdruck-Turbolader
- 2: Hockdruck-Turbolader
- 3: Niederdruck-Ladeluft/Kühlmittel-Kühler
- 4: Hochdruck-Ladeluft/Luft-Kühler
- 5: Niedertemperatur-Kühler
- 6: Haupt-Kühlmittelkühler
- 7: Lüfter
- 8: Motor
- 9: Pumpe
- 10: Pumpe
- 11: Thermostat
- 12: Kühlmittel
- 13: Ladeluft
- 14: Niedertemperatur-Kühlmittel
- 15: Kühlluft
- K: Kreislaufanordnung
- MK: Motorkühl-Kreislauf
- NK: Niedertemperatur-Kreislauf

## Patentansprüche

1. Kreislaufanordnung mit einem Niedertemperatur-Kreislauf (NK) zur Kühlung von Ladeluft (13), die einem Motor (8) zugeführt wird, bei einem Kraftfahrzeug mit einem Turbolader, wobei eine zweistufige Verdichtung der Ladeluft (13) in einem ersten Niederdruck-Turbolader (1) und einem zweiten Hochdruck-Turbolader (2) erfolgt, wobei zur Kühlung der Ladeluft (13) nach dem Niederdruck-Turbolader (1) und vor dem Hockdruck-Turbolader (2) ein erster Kühler (3) und nach dem Hochdruck-Turbolader (2) und vor dem Motor (8) ein zweiter Kühler (4) vorgesehen ist und wobei für die zweite Kühlung der Ladeluft (13) ein Hachdruck-LadeluftlLuft-Kühler (4) vorgesehen ist, **dadurch gekennzeichnet, dass** der Hochdruck-Ladeluft/Luft-Kühler (4) neben einem im Niedertemperatur-Kreislauf (NK) angeordneten Niedertemperatur-Kühler (5) und in Luftströmungsdchtung der Kühlluft (15) gesehen vor einem Haupt-Kühlmittel-Kühler (6) eines Motorkühlmittel-Kreislaufs (MK) angeordnet ist.

2. Kreislaufanordnung nach Anspruch 1, **dadurch gekennzeichnet, dass** für die erste Kühlung der Ladeluft (13) ein Niederdruck-Ladeluft/Kühlmittel-Kühler (3) vorgesehen ist.

3. Kreislaufanordnung nach Anspruch 1, **dadurch gekennzeichnet, dass** die Stirnfläche des Niedertemperatur-Kühlers (5) 20% bis 50% der gesamten Stirnfläche einnimmt.

4. Kreislaufanordnung nach einem der Ansprüche 1 bis 3, **dadurch gekennzeichnet, dass** der Niedertemperatur-Kreislauf (NK) unabhängig vom Motorkühl-Kreislauf (MK) ist und eine eigene Pumpe (10) zur Förderung des Kühlmittels (14) aufweist.

5. Kreislaufanordnung nach Anspruch 4, **dadurch gekennzeichnet, dass** die Pumpe (10) im Niedertemperatur-Kreislauf (NK) zwischen dem Niedertemperatur-Kühler (5) und dem Niederdruck-Ladeluft/Kühlmittel-Kühler (3) oder zwischen dem Niederdruck-Ladeluft/Kühlmittel-Kühler (3) und dem Niedertemperatur-Kühler (5) angeordnet ist.

6. Kreislaufanordnung nach einem der Ansprüche 1 bis 3, **dadurch gekennzeichnet, dass** der Niedertemperatur-Kreislauf (NK) Teil eines Motorkühl-Kreislaufs (MK) ist.

7. Kreislaufanordnung nach Anspruch 6, **dadurch gekennzeichnet, dass** der Niedertemperatur-Kreislauf (NK) von der Druckseite einer Pumpe (9) vom Motorkühl-Kreislauf (MK) abzweigt und dem Motorkühl-Kreislauf (MK) am Motoraustritt wieder zugeführt wird.

8. Verfahren zum Betreiben einer Kreislaufanordnung (K) gemäß einem der vorstehenden Ansprüche, **dadurch gekennzeichnet, dass** die Ladeluft (13) in mindestens zwei Stufen jeweils nach einer Verdichtung gekühlt wird.

9. Verfahren zum Betreiben einer Kreislaufanordnung (K) nach Anspruch 10, **dadurch gekennzeichnet, dass** die Ladeluft (13) nach der Zwischenkühlung im Niederdruck-Turbolader (1) eine Temperatur von zwischen 40°C und 110°C aufweist.

## Claims

1. Circuit arrangement comprising a low-temperature circuit (NK) for cooling charge air (13) fed to an engine (8) in a motor vehicle equipped with a turbocharger, wherein the charge air (13) is compressed in two stages in a first low-pressure turbocharger (1) and a second high-pressure turbocharger (2), wherein, in order to cool the charge air (13), a first cooler (3) is provided downstream of the low-pressure turbocharger (1) and upstream of the high-pressure turbocharger (2) and a second cooler (4) is provided downstream of the high-pressure turbocharger (2) and upstream of the engine (8) and wherein, for the second cooling of the charge air (13), a high-pressure charge air/air cooler (4) is provided, **characterised in that** the high-pressure charge air/air cooler (4) is arranged alongside a low-temperature cooler (5) provided in the low-temperature circuit (NK) and, seen in the direction of air flow of the cooling air (15), upstream of a main coolant cooler (6) of an engine coolant circuit (MK).

2. Circuit arrangement according to claim 1, **characterised in that** a low-pressure charge air/coolant cooler (3) is provided for the first cooling of the charge air (13).

3. Circuit arrangement according to claim 1, **characterised in that** the front face of the low-temperature cooler (5) takes up 20% to 50% of the total front surface.

4. Circuit arrangement according to any of claims 1 to 3, **characterised in that** the low-temperature circuit (NK) is independent of the engine coolant circuit (MK) and provided with its own pump (10) for delivering the coolant (14).

5. Circuit arrangement according to claim 4, **characterised in that** the pump (10) is arranged in the low-temperature circuit (NK) between the low-temperature cooler (5) and the low-pressure charge air/coolant cooler (3) or between the low-pressure charge air/coolant cooler (3) and the low-temperature cooler (5).

6. Circuit arrangement according to any of claims 1 to 3, **characterised in that** the low-temperature circuit (NK) is part of an engine cooling circuit (MK).

7. Circuit arrangement according to claim 6, **characterised in that** the low-temperature circuit (NK) branches off the discharge side of a pump (9) from the engine cooling circuit (MK) and is fed back to the engine cooling circuit (MK) at the engine outlet.

8. Method for operating a circuit arrangement (K) according to any of the preceding claims, **characterised in that** the charge air (13) is cooled in at least two stages, in each case following a compression.

9. Method for operating a circuit arrangement (K) according to claim 10, **characterised in that** the charge air (13) has a temperature between 40°C and 110°C after the intercooling in the low-pressure turbocharger (1).

## Revendications

1. Agencement de circuits comprenant un circuit (NK) à basse température servant au refroidissement de l'air de suralimentation (13) qui est fourni à un moteur (8), concernant un véhicule automobile comprenant un turbocompresseur, où il se produit une compression de l'air de suralimentation (13), à deux niveaux, dans un premier turbocompresseur (1) à basse pression et dans un deuxième turbocompresseur (2) à haute pression, où il est prévu, pour le refroidissement de l'air de suralimentation (13), en aval du turbocompresseur (1) à basse pression et en amont du turbocompresseur (2) à haute pression, un premier refroidisseur (3) et, en aval du turbocompresseur (2) à haute pression et en amont du moteur (8), un deuxième refroidisseur (4), et où il est prévu, pour le deuxième refroidissement de l'air de suralimentation (13), un refroidisseur (4) d'air de suralimentation à haute pression / d'air,
**caractérisé en ce que** le refroidisseur (4) d'air de suralimentation à haute pression / d'air est disposé à côté d'un refroidisseur (5) à basse température disposé dans le circuit (NK) à basse température et, vu dans la direction d'écoulement d'air de l'air de refroidissement (15), en amont d'un radiateur principal (6) à liquide de refroidissement d'un circuit (MK) du liquide de refroidissement du moteur.

2. Agencement de circuits selon la revendication 1, **caractérisé en ce qu'**il est prévu, pour le premier refroidissement de l'air de suralimentation (13), un refroidisseur (3) d'air de suralimentation à basse pression / de liquide de refroidissement.

3. Agencement de circuits selon la revendication 1, **caractérisé en ce que** la surface frontale du refroidisseur (5) à basse température occupe de 20 % à 50 de la surface frontale totale.

4. Agencement de circuits selon l'une quelconque des revendications 1 à 3, **caractérisé en ce que** le circuit (NK) à basse température est indépendant du circuit (MK) de refroidissement du moteur et présente une propre pompe (10) pour l'alimentation en liquide de refroidissement (14).

5. Agencement de circuits selon la revendication 4, **caractérisé en ce que** la pompe (10) est disposée, dans le circuit (NK) à basse température, entre le refroidisseur (5) à basse température et le refroidisseur (3) d'air de suralimentation à basse pression / de liquide de refroidissement, ou bien entre le refroidisseur (3) d'air de suralimentation à basse pression / de liquide de refroidissement et le refroidisseur (5) à basse température.

6. Agencement de circuits selon l'une quelconque des revendications 1 à 3, **caractérisé en ce que** le circuit (NK) à basse température fait partie d'un circuit (MK) de refroidissement du moteur.

7. Agencement de circuits selon la revendication 6, **caractérisé en ce que** le circuit (NK) à basse température se ramifie par rapport au circuit (MK) de refroidissement du moteur, à partir du côté refoulement d'une pompe (9), le liquide de refroidissement étant fourni à nouveau au circuit (MK) de refroidissement du moteur, au niveau de la sortie moteur.

8. Procédé de fonctionnement d'un agencement de circuits (K) selon l'une quelconque des revendications précédentes, **caractérisé en ce que** l'air de suralimentation (13) est refroidi à au moins deux niveaux, à chaque fois après une compression.

9. Procédé de fonctionnement d'un agencement de circuits (K) selon la revendication 8, **caractérisé en ce que** l'air de suralimentation (13) présente, après le refroidissement intermédiaire dans le turbocompresseur (1) à basse pression, une température comprise entre 40°C et 1.10°C
